# DEMANDE DE BREVET EUROPEEN

(11) **EP 2 015 437 A2**
(43) Date de publication de la demande: **14.01.2009**
(21) Numéro de dépôt: 08160072.8
(22) Date de dépôt: 10.07.2008
(51) Int. Cl.: H02M 5/257

(54) **Circuit de commande d'un commutateur alternatif**

(30) Priorité: 12.07.2007 FR 0756445
(71) Demandeur: STMicroelectronics SA, F-92120 Montrouge (FR)
(72) Inventeur: Heurtier, Jérôme, 37000 Tours (FR); Menard, Samuel, 37000 Tours (FR); Florence, Arnaud, 37360 Saint Antoine du Rocher (FR)
(74) Mandataire: de Beaumont, Michel

(57) **Abrégé**

L'invention concerne un circuit de génération d'un signal continu de commande (V_{C}) d'un commutateur alternatif (T) référencé à un premier potentiel (M2), à partir d'un signal (Vrf) haute fréquence référencé à un deuxième potentiel (M1), comportant : un premier élément capacitif (C1) reliant une première borne d'entrée (31), destinée à recevoir le signal haute fréquence, à la cathode d'un élément de redressement (D1) dont l'anode est reliée à une première borne de sortie (23) destinée à être reliée à une borne de commande du commutateur ; et un deuxième élément capacitif (C2) reliant une deuxième borne d'entrée (32), destinée à être connectée au deuxième potentiel de référence, à une deuxième borne de sortie (24) destinée à être connectée au premier potentiel de référence, un deuxième élément de redressement (D2) reliant la cathode du premier élément de redressement à la deuxième borne de sortie.

## Description

### Domaine de l'invention

La présente invention concerne les circuits électroniques et, plus particulièrement, la commande d'un commutateur d'une tension alternative relativement élevée au moyen d'un signal continu d'amplitude relativement faible, à travers une barrière d'isolement.

Un exemple d'application de la présente invention concerne les circuits de commande équipant des appareils électroménagers (par exemple, machine à laver, four, réfrigérateur, etc.). Plus généralement, l'invention s'applique à tout appareil électrique devant être commandé à partir d'un signal basse tension par rapport à une haute tension alternative qui l'alimente.

### Exposé de l'art antérieur

La commande d'une charge haute tension alimentée par une tension alternative élevée (par exemple, la tension secteur de plusieurs centaines de volts) au moyen d'un circuit électronique basse tension continue (au plus quelques dizaines de volts) requiert une barrière d'isolement entre ce circuit électronique et le commutateur alternatif. Une telle barrière d'isolement sert non seulement à protéger le circuit basse tension mais également à protéger l'utilisateur contre une éventuelle électrocution lorsqu'il actionne des organes de commande liés au circuit électronique. De plus, les commutateurs alternatifs sont des éléments intégrés bidirectionnels en courant et en tension dont la commande requiert un signal continu basse tension pour réamorcer le commutateur à chaque alternance de la tension alternative. Il s'agit, par exemple, de triacs ou autres dispositifs intégrés remplissant la même fonction. On a donc besoin d'un convertisseur continu-continu avec barrière d'isolement pour réaliser ces fonctions.

On a généralement recours à des transformateurs d'isolement dont le primaire est excité par un signal haute fréquence (impulsionnel continu ou alternatif) redressé et filtré au secondaire pour amorcer le commutateur alternatif. Par exemple, le document WO-A-2006/023767 décrit un convertisseur utilisant un transformateur dans un pont en H pour générer une alimentation isolée du primaire. Le recours à un transformateur d'isolement est encombrant et coûteux.

D'autres systèmes (par exemple tels que celui décrit dans le brevet américain n° 6 728 320) utilisent des éléments capacitifs pour transmettre un signal de commande entre un circuit intégré et un circuit de commande d'un commutateur alternatif. Une telle transmission ne concerne cependant que la consigne de commande et nécessite, côté commutateur alternatif, la génération d'une basse tension d'alimentation, donc encore un transformateur pour fournir l'énergie nécessaire aux amorçages successifs du commutateur.

On peut également utiliser des optocoupleurs, mais cela pose des problèmes de fiabilité sans éviter le besoin d'une alimentation au secondaire.

### Résumé de l'invention

Un mode de réalisation de la présente invention vise à pallier tout ou partie des inconvénients des techniques connues de conversion continu-continu à isolement galvanique pour commander un commutateur alternatif.

Un objet vise plus particulièrement à éviter le recours à un transformateur d'isolement.

Un autre objet vise également une solution de faible encombrement.

Pour atteindre tout ou partie de ces objets ainsi que d'autres, il est prévu un circuit de génération d'un signal continu de commande d'un commutateur alternatif référencé à un premier potentiel, à partir d'un signal haute fréquence référencé à un deuxième potentiel, comportant :
un premier élément capacitif reliant une première borne d'entrée, destinée à recevoir le signal haute fréquence, à une première borne d'un élément de redressement dont la deuxième borne est reliée à une première borne de sortie destinée à être reliée à une borne de commande du commutateur ; et
un deuxième élément capacitif reliant une deuxième borne d'entrée, destinée à être connectée au deuxième potentiel de référence, à une deuxième borne de sortie destinée à être connectée au premier potentiel de référence, un deuxième élément de redressement reliant la première borne du premier élément de redressement à la deuxième borne de sortie.

Selon un mode de réalisation, la première borne du premier élément de redressement est sa cathode, son anode étant reliée à la première borne de sortie.

Selon un mode de réalisation, la deuxième borne de sortie est destinée à être connectée à une borne de puissance du commutateur alternatif.

Selon un mode de réalisation, les éléments capacitifs sont des condensateurs haute tension.

Selon un mode de réalisation, une capacité relie la deuxième borne du premier élément de redressement à la deuxième borne de sortie.

Selon un mode de réalisation, le signal haute fréquence est un signal impulsionnel continu.

Selon un mode de réalisation, les éléments capacitifs ont des valeurs de plusieurs picofarads.

Selon un mode de réalisation, les éléments de redressement sont des diodes Schottky.

Il est également prévu un système de commande en alimentation d'une charge par une tension d'alimentation alternative relativement élevée au moyen d'une tension continue relativement faible, comportant :
au moins un commutateur alternatif connecté à la charge ;
un circuit électronique de fourniture de la tension continue ; et
un circuit de génération d'un signal continu de commande du commutateur alternatif.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma-bloc d'un système de commande d'un commutateur alternatif ;
la figure 2 représente un mode de réalisation d'un convertisseur continu-continu de commande d'un commutateur alternatif ;
les figures 3A, 3B, 3C, 3D, 3E et 3F sont des chronogrammes illustrant le fonctionnement du convertisseur de la figure 2 en régime établi ;
les figures 4A et 4B sont des chronogrammes illustrant le fonctionnement du convertisseur au démarrage ; et
la figure 5 est un schéma-bloc d'un boîtier intégrant les circuits formant le convertisseur.

De mêmes éléments ont été désignés par de mêmes références aux différentes figures qui ont été tracées sans respect d'échelle, notamment pour les chronogrammes.

### Description détaillée

Par souci de clarté, seuls les éléments utiles à la compréhension de l'invention ont été représentés et seront décrits. En particulier, la charge commandée par le commutateur alternatif n'a pas été détaillée, l'invention étant compatible avec toute charge commandée par un tel commutateur.

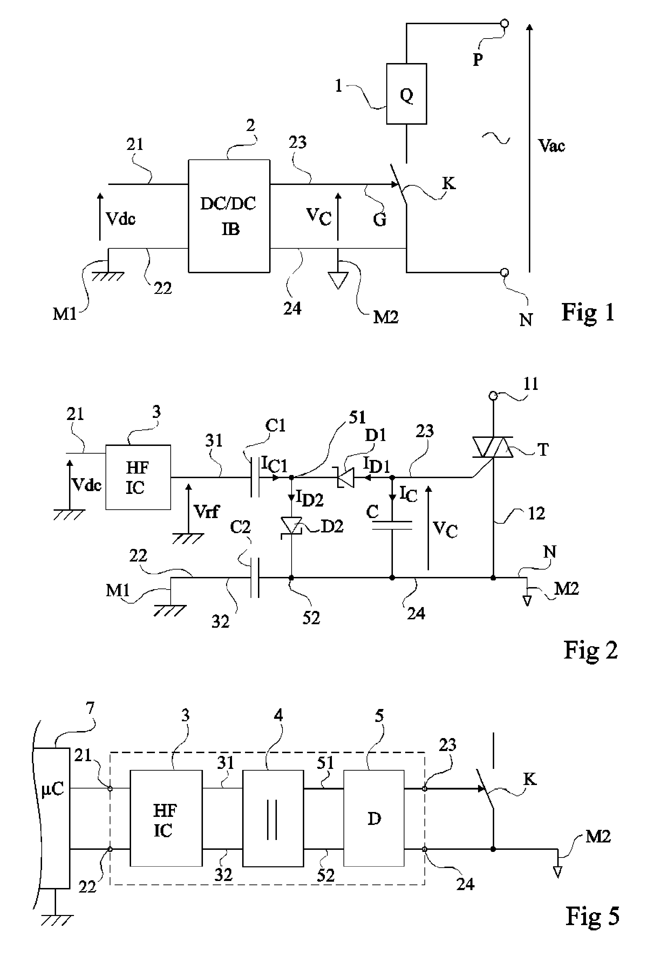

La figure 1 est un schéma-bloc d'un système de commande en alimentation d'une charge 1 (Q) par une tension alternative Vac d'amplitude relativement élevée et de fréquence relativement basse (par exemple, la tension alternative du réseau de distribution électrique) au moyen d'un commutateur alternatif K. La charge 1 est connectée en série avec le commutateur K entre deux bornes P et N d'application de la tension Vac.

Le commutateur K est commandé à partir d'un signal continu V_{C} d'amplitude relativement basse fournie par un convertisseur continu-continu 2 (DC/DC IB) à barrière d'isolement d'une basse tension continue Vdc appliquée entre deux bornes d'entrée 21 et 22. La tension Vdc est fournie, par exemple, par un circuit électronique non représenté de type microcontrôleur. La tension Vdc est au plus de quelques dizaines de volts et de préférence inférieure à 10 volts. Le microcontrôleur reçoit, par exemple, une consigne de commande provenant d'un bouton externe manipulable par un utilisateur et/ou génère le signal Vdc à partir de cycles de fonctionnement souhaités et programmés pour la charge. La tension Vdc est référencée à un potentiel M1 tandis que la tension V_{C} entre des bornes 23 et 24 de sortie du convertisseur 2 est référencée à un potentiel M2 différent du potentiel M1.

La figure 2 représente un mode de réalisation du convertisseur 2.

Le convertisseur 2 comporte un circuit intégré 3 (HF IC) comportant un oscillateur radiofréquence convertissant la tension continue Vdc en un signal Vrf d'amplitude relativement basse et de fréquence relativement élevée, destiné à franchir la barrière d'isolement. La fréquence du signal Vrf est comprise entre plusieurs centaines de kHz et quelques GHz. Le signal Vrf est un signal impulsionnel continu (non alternatif) fourni sur une borne 31 et référencé à la masse M1 (borne 22 ou 32) du signal Vdc.

La barrière d'isolement 4 est constituée de deux éléments capacitifs haute tension (tenant une tension d'au moins 1000 volts) C1 et C2 dont des premières électrodes respectives sont connectées aux bornes 31 et 32 et dont des secondes électrodes respectives sont connectées à des bornes 51 et 52 d'entrée d'un circuit de redressement 5.

Le circuit 4 comporte une première diode D1 dont la cathode est reliée à la borne 51 et dont l'anode est reliée à la borne de sortie 23 du convertisseur 2, destinée à être connectée à l'électrode de commande G du commutateur alternatif. Une deuxième diode D2 relie les bornes 51 et 52 avec son anode côté borne 51. Les bornes 52 et 24 sont reliées entre elles. Les diodes D1 et D2 sont des diodes suffisamment rapides (haute fréquence) pour commuter au rythme de la tension Vrf.

Dans l'exemple de la figure 2, le commutateur alternatif est un triac T dont les deux bornes de conduction ou de puissance 11 et 12 sont respectivement reliées à la charge et à une (N) des bornes d'application de la tension alternative Vac. Pour être amorcé, un courant doit être extrait de la gâchette du triac à chaque alternance de la tension alternative Vac. En variante, le commutateur K est un commutateur alternatif connu sous la dénomination commerciale "ACS", commercialisé par la société STMicroelectronics. Plus généralement, n'importe quel commutateur alternatif peut être utilisé. Par exemple, le commutateur alternatif est un transistor IGBT ou un transistor MBS à commande négative ou positive. Dans le cas d'une commande positive, les polarités des diodes D1 et D2 sont inversées.

La tension de commande V_{C} appliquée sur la gâchette du triac T est lissée au moyen d'un élément capacitif C reliant les bornes G et N. L'élément C peut être un condensateur ou la capacité intrinsèque du commutateur T entre ses bornes G et 12.

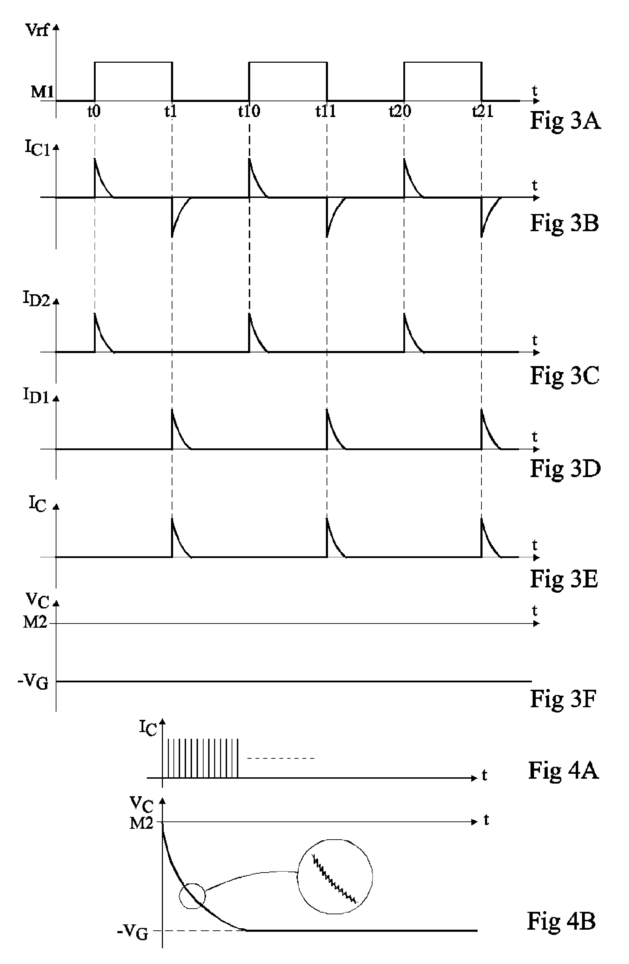

Les figures 3A, 3B, 3C, 3D, 3E et 3F illustrent le fonctionnement du circuit de la figure 2 en régime établi. La figure 3A représente un exemple d'allure du signal radio-fréquence Vrf de commande. Les figures 3B à 3E illustrent les courants respectifs I_{C1}, I_{D2}, I_{D1} et I_{C} dans l'élément capacitif C1, la diode D2, la diode D1 et l'élément capacitif C. La figure 3F illustre l'allure de la tension de commande V_{C}. Les courants et tensions sont donnés avec les orientations représentées en figure 2, en supposant une tension Vrf positive par rapport à la masse M1.

A chaque front montant (instants t0, t10, t20, figure 3A) du signal Vrf, une impulsion positive circule à travers le condensateur C1, la diode D2 et le condensateur C2. A chaque front descendant (instants t1, t11, t21) du signal Vrf, une impulsion négative circule dans le condensateur C1 en passant à travers l'élément capacitif C et la diode D1. La capacité C se charge donc avec une tension négative par rapport au potentiel de la borne N à chaque front descendant du signal Vrf, l'énergie des fronts montants du signal Vrf n'étant pas utilisée. La tension V_{C} a, en régime établi, un niveau -V_{G} fixé par la caractéristique d'entrée du commutateur de puissance.

Les figures 4A et 4B illustrent le démarrage du système. Partant d'une tension V_{C} nulle (figure 4B) aux bornes de l'élément C, les premières impulsions négatives successives du courant I_{C1} se traduisent par des impulsions positives du courant I_{C} chargeant négativement la capacité C. La tension V_{C} met donc plusieurs périodes du signal radio-fréquence Vrf pour atteindre le niveau -V_{G} permettant l'amorçage du triac. Plus la fréquence du signal Vrf est élevée, plus cette durée d'établissement est courte. Plus les capacités des éléments C1 et C2 sont faibles, plus cette durée est longue. En régime établi, l'énergie transférée à chaque front descendant du signal Vrf est suffisante pour maintenir le niveau -V_{G}.

La figure 5 est un schéma-bloc illustrant le convertisseur 2 intégré dans un boîtier 6 regroupant ses différents constituants, à savoir le circuit intégré 3 (HF IC), la barrière d'isolement capacitive 4 et le circuit de redressement 5 (D). Le boîtier 6 comporte alors deux bornes d'entrée 21 et 22 destinées à l'application de la basse tension Vdc de commande continue référencée à la masse M1 et provenant d'un circuit électronique basse tension 7 (par exemple, un microcontrôleur µC), et deux bornes de sortie 23 et 24 fournissant la tension V_{C} de commande continue du commutateur K, référencée à la masse M2 de la haute tension alternative Vac.

Selon un exemple particulier de réalisation :

les éléments capacitifs C1 et C2 sont des condensateurs haute tension ayant chacun une valeur comprise entre quelques picofarads et quelques dizaines de picofarads (par exemple, 10 pF) ;
les diodes D1 et D2 sont des diodes Schottky ;
la tension Vrf a une amplitude d'environ 5 volts et une fréquence d'environ 1 GHz ;
le niveau -V_{G} est de l'ordre de -1,2 volts et le courant I_{C} a une amplitude de l'ordre de quelques dizaines de milliampères.

L'obtention d'une tension d'isolement de 2000 à 2500 volts requiert une épaisseur de quelques micromètres d'isolant de type circuit imprimé (PCB) entre les deux électrodes des éléments capacitifs C1 et C2.

Un avantage du convertisseur décrit est qu'il exploite la barrière capacitive pour transférer non seulement la consigne de commande mais également l'énergie.

Un autre avantage du convertisseur est qu'il est particulièrement simple tout en inversant le potentiel de commande du commutateur alternatif (la tension V_{C} est négative par rapport à son potentiel de référence M2 alors que la tension Vrf est positive par rapport à son potentiel de référence M1).

Un autre avantage est que le circuit intégré de génération du signal Vrf peut être simplifié. En effet, le recours à un transformateur d'impulsions nécessitait une génération d'un signal sinusoïdal limité en harmonique à une fréquence particulière liée à la bande passante du transformateur. Ce problème ne se pose pas avec la barrière capacitive. Le signal Vrf peut donc être un train d'impulsions continues, plus simple à générer qu'un signal alternatif.

Un autre avantage est que le convertisseur présente une bonne immunité aux perturbations électromagnétiques. Dans une réalisation par pistes ou plans conducteurs, les électrodes planes des capacités engendrent moins d'effet d'antenne que des enroulements plans d'un transformateur.

Un autre avantage est un rendement amélioré en raison d'une résistance série des éléments capacitifs C1 et C2 inférieure aux résistances série des éléments inductifs d'un transformateur d'isolement. Cela compense la perte liée à la non récupération de l'énergie des fronts positifs du signal Vrf.

Des modes de réalisation particuliers de la présente invention ont été décrits. Diverses modifications et variantes apparaîtront à l'homme de l'art. En particulier, le choix des valeurs des éléments capacitifs et des diodes Schottky dépend de l'application et notamment de la puissance de commande requise en aval de la barrière d'isolement. Par exemple, plusieurs commutateurs alternatifs peuvent être commandés par un même convertisseur. De plus, le circuit électronique de type microcontrôleur en amont du convertisseur peut, en variante, fournir directement la tension haute fréquence Vrf.

## Revendications

1. Circuit (4, 5) de génération d'un signal continu de commande (V_{C}) d'un commutateur alternatif (K, T) référencé à un premier potentiel (M2), à partir d'un signal (Vrf) haute fréquence référencé à un deuxième potentiel (M1), **caractérisé en ce qu'**il comporte :
un premier élément capacitif (C1) reliant une première borne d'entrée (31), destinée à recevoir le signal haute fréquence, à une première borne d'un élément de redressement (D1) dont une deuxième borne est reliée à une première borne de sortie (23) destinée à être reliée à une borne de commande (G) du commutateur ; et
un deuxième élément capacitif (C2) reliant une deuxième borne d'entrée (32), destinée à être connectée au deuxième potentiel de référence, à une deuxième borne de sortie (24) destinée à être connectée au premier potentiel de référence, un deuxième élément de redressement (D2) reliant la première borne du premier élément de redressement à la deuxième borne de sortie.

2. Circuit selon la revendication 1, dans lequel la première borne du premier élément de redressement (D1) est sa cathode, son anode étant reliée à la première borne de sortie (23).

3. Circuit selon la revendication 1 ou 2, dans lequel la deuxième borne de sortie (24) est destinée à être connectée à une borne de puissance (12) du commutateur alternatif (K, T).

4. Circuit selon l'une quelconque des revendications 1 à 3, dans lequel les éléments capacitifs (C1, C2) sont des condensateurs haute tension.

5. Circuit selon l'une quelconque des revendications 1 à 4, dans lequel une capacité (C) relie la deuxième borne du premier élément de redressement (D1) à la deuxième borne de sortie (24).

6. Circuit selon l'une quelconque des revendications 1 à 5, dans lequel le signal haute fréquence (Vrf) est un signal impulsionnel continu.

7. Circuit selon l'une quelconque des revendications 1 à 6, dans lequel les éléments capacitifs (C1, C2) ont des valeurs de plusieurs picofarads.

8. Circuit selon l'une quelconque des revendications 1 à 7, dans lequel les éléments de redressement (D1, D2) sont des diodes Schottky.

9. Système de commande en alimentation d'une charge (1) par une tension d'alimentation alternative relativement élevée (Vac) au moyen d'une tension continue (Vdc) relativement faible, **caractérisé en ce qu'**il comporte :
au moins un commutateur alternatif (K) connecté à la charge ;
un circuit électronique (7) de fourniture de la tension continue ; et
un circuit conforme à l'une quelconque des revendications précédentes.
